# EUROPEAN PATENT SPECIFICATION

(11) **EP 2 937 488 B1**
(45) Date of publication and mention of the grant of the patent: **19.02.2020**
(21) Application number: 15165687.3
(22) Date of filing: 27.12.2013
(51) Int. Cl.: E04D 13/147, B32B 15/00, B32B 7/12, B32B 7/06, B32B 5/02, B32B 7/14, B32B 15/085, B32B 15/14, B32B 15/20, B32B 27/32, B32B 3/06, B32B 3/08, B32B 3/28, B32B 27/08

(54) **A SKIRT MEMBER FOR USE IN A FLASHING FOR A ROOF PENETRATING STRUCTURE AND USE OF A SKIRT MEMBER IN FLASHING A ROOF WINDOW MOUNTED IN AN INCLINED ROOF**
SCHÜRZENELEMENT ZUR VERWENDUNG IN EINEM KEHLBLECH FÜR EINE DACHDURCHDRINGENDE STRUKTUR UND VERWENDUNG EINES SCHÜRZENELEMENTS BEIM VERBLECHEN EINES DACHMONTIERTEN FENSTERS IN EINEM GENEIGTEN DACH
ÉLÉMENT DE JUPE UTILISÉ DANS UN SOLIN POUR STRUCTURE PÉNÉTRANT DANS LE TOIT ET UTILISATION D'UN TEL ÉLÉMENT POUR APPLIQUER UN SOLIN SUR UNE FENÊTRE DE TOIT MONTÉE SUR UN TOIT INCLINÉ

(30) Priority: 27.12.2012 DK 201270827
(43) Date of publication of application: 28.10.2015
(62) Divisional of application: 13199622.5
(73) Proprietor: VKR Holding A/S, 2970 Hørsholm (DK)
(72) Inventor: Melsen, Michael, 8632 Lemming (DK)
(74) Representative: AWA Denmark A/S

(56) References cited:
- WO-A1-01/65029
- WO-A1-2008/026921
- US-A1- 2010 040 902
- US-B1- 6 235 365

## Description

The present invention relates to a skirt member for use in a flashing for a roof penetrating structure, comprising a first edge intended to be arranged at the roof penetrating structure, a second edge opposite the first edge and intended to rest on a roof surface and two end edges extending between the first and second edges, and comprising a first cover layer and a second cover layer, said first and second cover layers being interconnected by a first adhesive layer, said first cover layer being intended to face the exterior of a building in the mounted state of the flashing, and said first adhesive layer having a density of at least 2.5 g/ml.

Skirt flashing elements, which typically comprise a skirt member adapted for resting on the outer surface of the roofing material and a plate or rail member to be attached to the roof penetrating structure, are used for sealing joints between building structures penetrating a roof surface, for example a joint between the frame of a roof window and the surrounding roofing material, particular at the lower horizontal member of the main frame of the roof window. The skirt member is important with regard to securing a well-fitting, stable and secure sealing of the joint between a roof penetrating structure and a roof surface, particularly when using an undulated roofing material such as tiles. The skirt element shall ideally provide for an easy mounting procedure, which ensures that the skirt member is firmly and closely mounted onto the roof surface and stays in this position for the entire lifetime of the flashing. In order to achieve this, the skirt member is made of a material, which is easy to bend, preferably by hand, and which has a relatively high weight and a low elasticity.

Skirt flashing elements have traditionally been made from lead plates with a thickness of approximately 1 mm. Lead as a flashing material has a number of advantages as it is very easy to deform with only a very limited elasticity, i.e. the lead plate substantially stays in the form into which it is initially bend without any elastic bouncing back. This inherent feature of lead is of great advantage when a lead-skirt is shaped directly onto for example an undulated roof surface, since such skirts cannot be bent in excess in order to compensate for possible elastic re-bouncing. Although lead is virtually non-elastic, there may be a minimal re-bouncing, but as lead is a very heavy material, gravity will keep the lead-skirt in close contact with the roof surface. The high weight also prevents the skirt from being lifted and bent backwards by heavy winds. Lead, however, is environmentally harmful and has therefore been forbidden for use in construction work in many countries.

Different kinds of skirt flashing elements having a sandwich structure with a stress damping and stabilizing layer of ductile material covered by a foil sheeting has been suggested as alternatives to lead. The core layer has typically been made out of a polymeric material or bitumen product, and the foil has typically been a thin metal foil, preferably aluminium foil, as described for example in WO01/65029.

For use on roof surfaces in the form of undulated tiles with very deep troughs these sandwich structures are typically wave-corrugated or pleated giving them a surplus of material, which allows them to stretch so that a good fit between the flashing and roofing may be obtained.

Practice, however, has shown that skirt flashing elements are not always mounted correctly, meaning that the deformation work needed for achieving a tight fit between the skirt member and the roofing material is not completed. This results in gaps between the roofing material and the skirt member, which again results in a risk of rain water or snow finding its way into the roof structure and in an increased risk of the skirt member being lifted from the roof during heavy winds.

As also described in WO01/65029 the skirt member may be made with an adhesive core layer and no foil sheeting on the interior side, i.e. the side facing the roofing material and the interior of the building in the mounted state. In this way the core layer adheres to the roofing material and thus contributes to a tighter fit, but the lifetime of such flashings is short due to the exposure of the core layer.

Still another alternative, where a metal grid is covered with an elastomeric material on both sides, is described in WO95/31620. This embodiment has the advantage that the amount of metal is limited. Aluminium and other metals typically used in flashings undergoes a cold deformation when the skirt member is bend back during mounting of the flashing, said cold deformation resulting in an increased elasticity of the material and hence an increased tendency of the skirt to bounce back up. Polymers generally do not undergo such structural changes. However, the disadvantages with respect to deterioration described with reference to WO01/65029 also apply here.

It is therefore the object of the invention to provide an improved skirt flashing, which is both easy to mount and durable.

This is achieved with a skirt member comprising the features of claim 1.

The provision of a second adhesive layer and a third cover layer provides a combination of the advantages of skirt materials having two plastic layers sandwiched around a more stable and/or durable material, such as for example a metal mesh, with the advantages of materials having a plastic material in the centre of the sandwich and more stable materials on the outsides. In other words, a skirt member having several cover layers, which provide dimensionally stability and durability, and several adhesive layers, at least one of which has plastic properties and thus providing a non-elastic deformability, which allows a tight fit against the roof surface.

In an embodiment, the adhesive force of the second adhesive layer to the second cover layer is stronger than to the third cover layer. This allows the third cover layer to be removed at least partially so that the second adhesive layer may adhere to the roofing material underneath the skirt element. Such adhesion may in itself contribute to the skirt member being pulled into place and shape during mounting and will counter re-bouncing due to elasticity in the other layers. Further it will help prevent that the skirt member is lifted by heavy winds.

The mounting of a roof penetrating structure, such as a roof window, often necessitates a gap between the outer surface of the roof penetrating structure, e.g. the roof window frame, and the edge of the roofing material closest thereto. When the second adhesive layer is intended to adhere to the roofing material, it may then be sufficient that the second adhesive layer covers only part of the second cover layer. Moreover, the ductile properties and resulting deformability, to which a second adhesive layer having plastic properties may contribute, is primarily needed at the part of the skirt member, which is located above the roofing material, particularly when using tiles and like non-planar roofing materials. However, as the second adhesive layer will usually add to the insulating properties of the skirt member and/or contribute to dampening the sound resulting from raindrops or hail hitting the skirt member, it may still be preferred to let it cover the second cover layer entirely.

The size of the third cover layer is preferably adapted to the size of the second adhesive layer.

As mentioned above, if the second adhesive layer is made from a plastic material, the adhesive material will be able to compensate for level changes and irregularities in the roof surface and this applies both with and without the third cover layer. If the adhesive layer is thick enough it may close any gaps between the skirt member and the roofing material entirely, thus making the construction less susceptible to the lifting forces of heavy winds and minimizing the risk of ingress of rainwater and snow. This is particularly so when the third cover layer is removed, as the adhesive material will then be able to penetrate into very small recesses and openings, which will also lead to a better adhesion to the roofing material. Accordingly, the material of the second adhesive layer is preferably made from a material suitable for contact with and adhesion to common roof materials such as tiles, concrete, fibre cement, metallic roofing sheets or roofing felt.

If the first adhesive layer is made from a plastic material, the first and second cover layers may be displaced somewhat in relation to each other, thus increasing the flexibility and the ability of the skirt member to adapt the shape of the roofing material.

In a preferred embodiment the first adhesive layer is made from a polymer, elastomer or natural compound such as bitumen-based product or butyl-rubber admixed with heavy particles for increased density as described in WO01/65029. Presently it is preferred to use a bitumen material with particles of barium sulphate or ferric oxide, but any other material suitable for contact with and adhesion to the cover layers for an extended period of time may be used.

The first adhesive layer of the sandwich construction can be chosen from a group of adhesive polymers comprising acrylics, acrylonitrile butadienes, isobutylene isoprenes, ethylene propylenes, such as ethylene propylene diene monomer, silicones, such as fluoro silicone, styrene butadienes, such as styrene butadiene carboxy block copolymer, chlorosulphonated polyethylene, ethylene-acrylate rubber, ethylene-vinyl acetate, fluorocarbon rubber, fluoronated hydrocarbon, hydrogenated nitrile butadiene, butyl rubber, such as isobutylene isoprene butyl, perfluorocarbon rubber, polyacrylate rubber, polybutadiene, polybutadienepolyamide, polychloroprene, polyester urethane, polyether urethane, polyisoprene, polypropylene, polysiloxane, polyurethane and polyvinyl acetate, or from mixtures of such materials or materials based on such polymers, including bituminous compositions. Polymers and polymer-based materials having a high molecular weight are preferred. Any of these materials could be admixed with adhesion promoters, such as silanes or derivatives thereof, including amino silanes, epoxy silanes, ureido silanes and vinyl silanes.

Fibrous or powdered filler including metal are added in order to obtain a high density and/or a desired deformability. Ceramics and polymers may also be added.

The second adhesive layer should be chosen with due regard to the fact that it will usually be more exposed to environmental factors such as moisture and will often be in contact with the roofing material. It is therefore made from a material without metal particles. It may be expedient to also add one or more stabilizer, such as a UV-stabilizer.

The first cover layer is preferably made of the same sheet material as used for other parts of the flashing, i.e. typically aluminium, which is painted or lacquered on the exterior side facing away from the first adhesive layer. It may, however, also be made from other metals, such as cobber or zinc, from a polymer, such as polyvinylchloride (PVC) or polyethylene (PE) or from any other material or composite capable of withstanding the temperature gradients, moisture and UV radiation occurring on a roof. The first cover layer preferably has a thickness of 0.1 to 0.5 mm.

The first cover layer of the sandwich construction can be made from a metal foil material suitable for roof flashing purposes, for instance chosen from the group of metals comprising aluminium, zinc, copper and steel, or from a polymer chosen from the group comprising polyolefines, polycarbonates, polyesters, acrylates, aldehyde resins, polyamides, polyetherketones, styrene-butadienes, such as acrylonitrile butadiene styrene, polyimides, polyphenylene sulfides, polyoxymethylenes (POM), where the group of polyolefines includes thermoplastic polyolefines, such as polyethylene (PE), polypropylene (PP), polymethylpentene (PMP) and polybutylene, and polyolefin elastomers, such as polyisobutylene (PIB), ethylene propylene rubber (EPR), ethylene propylene diene monomer (M-class) rubber (EPDM rubber), polyvinyl chloride (PVC) and polyvinyl fluoride (PVF). It may also be made from a mixture, alloy or laminate of these materials and it may include fillers, surface coatings, adhesion promoters and/or release agents.

The second and third cover layers are preferably made from polymers, such as polyethylene or polyvinylchloride, ceramics, metals, plant fibres or composite or mixtures thereof. These materials are preferably provided as sheet materials or foils, but may also be grids, weaves or non-wovens.

The second cover layer is of another material than the first cover layer and preferably of a polymer chosen from the group comprising polyolefines, polycarbonates, polyesters, acrylates, nylon, aldehyde resins, polyamides, polyetherketones, styrene-butadienes, such as acrylonitrile butadiene styrene, polyimides, polyphenylene sulfides, polyoxymethylenes (POM), where the group of polyolefines includes thermoplastic polyolefines, such as polyethylene (PE), polypropylene (PP), polymethylpentene (PMP) and polybutylene, and polyolefin elastomers, such as polyisobutylene (PIB), ethylene propylene rubber (EPR), ethylene propylene diene monomer (M-class) rubber (EPDM rubber), polyvinyl chloride (PVC) and polyvinyl fluoride (PVF). It may also be made from a mixture or laminate of these materials and it may include fillers, surface coatings, adhesion promoters and/or release agents.

The third cover layer of the sandwich construction may be made from the same materials as the ones mentioned for the first and second cover layers, but might not need the same resistance properties and could therefore also be made from materials based on plant fibres or composite or mixtures thereof.

One advantage of using a polymer for the second cover layer, and the third cover layer if intended to be left on in the mounted state, is that the total structure becomes less elastic than if using aluminium or like metals.

Another advantage of using polymers is that they generally have smaller carbon footprints than metals.

The choice of material for the different layers of the skirt member should be made so that the total structure is sufficiently ductile to be able to conform to the shape of common roofing materials, not least tiles, which are widely used on European buildings. Making the material with a corrugation or pleating will provide a surplus of material, which is will allow the skirt member to reach the bottoms of the valleys in a tile roof even more easily.

Another factor worth considering when choosing the combination of materials to be used is the life-cycle of the product. By using a combination of a metal for the first cover layer and materials, which melts or burns at lower temperatures for the adhesive layers and other cover layers, the metal may be easily separated and recycled when the skirt member has to be replaced or disposed of for other reasons.

When intending to remove the third cover layer entirely during installation of the skirt element, it is presently preferred that the second cover layer is made from a strong and durable material, whereas the third cover layer can be made from a weaker and cheaper material, typically a sheet material or nonwoven, preferably being made of a polymer, plant fibres or a combination thereof. To facilitate removal, it may be coated with a release agent.

It is also possible to provide the third cover layer as two or more separate sheets of material, allowing one of them to be removed while leaving the other one on, so that a first part of the second adhesive layer may adhere to the roofing material while the other stays protected. A similar effect can be achieved by providing the third cover layer with a weakening, where it may easily be torn, or with a pattern indicating where to cut the material. A line of local perforations or embossments may serve both these purposes, while an embedded tear-out strip may be used for easy separation and a printed pattern may serve as a cutting indication.

The invention will now be explained in closer detail with reference to embodiments shown in the drawing, in which
Fig. 1 shows a skirt flashing element in a perspective view, where the right-hand side of the skirt element has been cut away and where some layers are partially cut away to expose the others, and
Fig. 2 shows a cross-section of another embodiment of a skirt member with a centre section cut away.

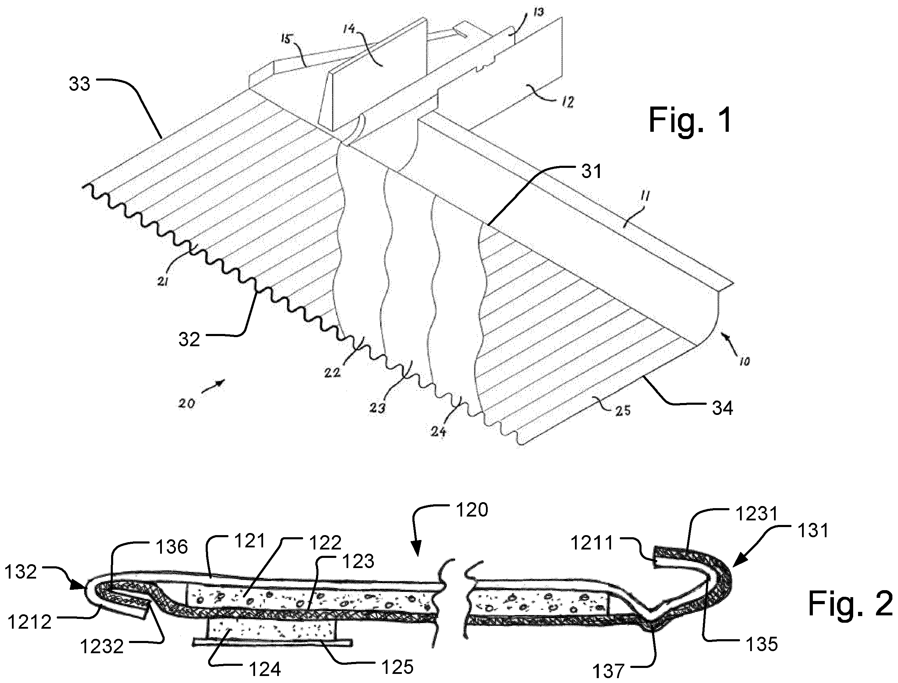

In the embodiment shown in Fig. 1, the flashing element comprises a rail member 10 and a skirt member 20. The rail member is attached to the skirt member along a first edge 31 thereof and serves as a connecting element between the skirt member 20 and, for example, the frame of a roof window (not shown) installed in an inclined roof. The rail member 10 comprises a number of sub-elements 11, 12, 13, 14, 15 intended for being connected to the window and/or roof in a manner known per se.

The skirt member 20 comprises a five-layer laminated structure with a first cover layer 21, a first adhesive layer 22, a second cover layer 23, a second adhesive layer 24 and a third cover layer 25. The first cover layer 21 has been connected to the second cover layer 23 by means of the first adhesive layer 22. The skirt member is corrugated to provide a surplus of material in a direction along its first edge 31 and second edge 32.

In this embodiment the first cover layer is made from sheet aluminium with a thickness of 0,15 mm, which has been lacquered, while the second cover layer 23 is a cross-laminated foil of a polyolefin, preferable polyethylene, such as the one sold under the trademark Valeron® and with a thickness of 0,075 mm. Regardless what material is used, they must be resistant to contact with the materials used in the first adhesive layer, and for the second cover layer also those used for the second adhesive layer and the roofing material. Moreover, as the skirt element will be subject to large temperature variations, the first and second cover layers must be able to follow the thermal expansions of the other materials of the skirt member and vice versa. When using a polymer for the second cover layer it is presently preferred that the sheet is at least 0,075 mm thick, has a tensile strength of at least 40 MPa, a tearing strength of at least 55 N and displays an elongation at break of at least 150 % and shrinkage of no more than 3%.

The third cover layer is made from as polymer, such as polypropylene or polyethylene, or silicone coated paper. One example is a silicone-coated polyethylene foil. Regardless what material is used, it must be resistant to contact with the materials used in the second adhesive layer, and is preferably provided with a release agent to make sure that the third cover layer can be easily pulled off when needed, but it should of course not fall off prematurely. It is presently preferred that the cover layer has a thickness of at least 0,030 mm, a tensile strength of at least 40 MPa, a tearing strength of at least 20 N and displays an elongation at break of at least 150 % and shrinkage of no more than 3%.

The first adhesive layer may be made as described in WO01/65029, i.e. from a carrier material admixed with a non-structural constituent in the form of a metal compound having a density higher than 3.5 g/ml, preferably higher than 4.5 g/ml. The non-structural constituent may be particles and may be a pure metal, an oxidized metal, an alloy or bound in a chemical compound, such as in inorganic salt. It may be of a mineral, ceramic, metallic or polymeric nature, but these embodiments are not part of the claimed invention. According to the invention, the non-structural constituent is in the form of a metal compound. Presently preferred materials are ferric oxide, which is usually readily available and cheap, and barium sulphate, which has excellent weather resistance properties. Other possible metals, which may form basis for the non-structural constituent, are silver, molybdenum and copper, which may be bound in a chloride, sulphate, sulphide, or nitrate salt. Further compounds not containing heavy metals, such as for example carbon black, may also be used, but these embodiments are not part of the claimed invention.

The non-structural constituent preferably constitutes more than 50 % by weight of the second adhesive layer material, preferably 75% and still more preferred up to 95 %.

The carrier materials should of course be compatible with the non-structural constituent chosen. Polymeric materials, such as PVC or butyl rubber (styrene-butadiene radial block copolymer), and bitumen products are suitable for this purpose. Bitumen may be preferred is some aspects of the invention because it is sufficient tacky at ambient temperatures for allowing the lamination with a foil sheeting used as cover layer. When environmental considerations are important butyl rubber is advantageous. A butyl rubber material with high tackiness and which is suitable for use in the second adhesive layer can be achieved by admixing carbon black and particulate barium sulphate. However, when making the material for the skirt member in a lamination process, the tackiness of butyl rubber and PVC may not be sufficient for achieving a good adhesion to the cover layers.

Regardless what material is used, the first adhesive layer must be resistant to contact with the materials used in the first and second cover layers. Moreover, as the skirt member will be subject to larger temperature variations, the first adhesive layer must be able to follow the thermal expansions of the other materials of the skirt member and vice versa. It is presently preferred that the first adhesive layer material has a density of at least 2,6 g/ml, a solids content of at least 99,5 %, a calcined residue of at least 80 % and an adhesion of at least 30 N.

As the second adhesive layer may be exposed as will be explained below, it may need a better weather resistance. It does therefore not contain metal particles and may additionally comprise a stabilizer. Regardless what material is used, it must be resistant to contact with the materials used in the second cover layer and the roofing material. It is presently preferred that the second adhesive layer material has a density of at least 1,2 g/ml, an ash content of no more than 51 %, an adhesion of at least 25 N to tiles and concrete, and a peel strength (180°-Peel at 23°C and 200 mm/min in accordance with DIN EN ISO 8510-2) of at least 1,50 N/mm.

All of the materials used in the skirt member must be able to endure the climate on a roof surface and must therefore be resistant to moisture and preferably also UV radiation and all of the properties of the materials described above must be maintained over the entire lifetime of the skirt member, typically at least 20 years. The materials used in the third cover layer may, however, be of a less durable nature, if the third cover layer is to be removed entirely during installation.

Any combination of the materials mentioned above for the different layers of the skirt member may be chosen and is within the scope of the invention as long as it results in a stable and durable skirt member having the properties described in claim 1.

In Fig. 2 similar elements has been given the same numbers as in Fig. 1 but with 100 added. When nothing else is stated it is to be understood that these element have the same function and/or structure in both embodiments.

In Fig. 1 all layers of the skirt member 20 is illustrated as having the same size, but this need not be the case. In the embodiment in Fig. 2, the first and second cover layers 121, 123 define the extent of the skirt member 120, whereas the widths of the other layers 122, 124, 125 are smaller.

Starting with the first adhesive layer 122, this layer has been isolated from the exterior by the outer edges 1211, 1212, 1231, 1232 of the first and second cover layers 121 ,123 being given a bent 135, 136. In Fig. 2 the first adhesive 122 layer has been illustrated as ending a distance from the bend edges so that the material of the first and second cover layers come together substantially without compressing or deforming the first adhesive layer. This is to provide good contact between the cover layers and provide a very durable skirt member, but in other embodiments the first adhesive layer may extend further.

The edges 1211, 1231 to the right in Fig. 2 are intended to be interconnected to a rail member (not shown) as the one in Fig. 1 and the bend 135 is relatively open to allow engagement with a similarly bent edge on the rail member. Once the bend edges of the skirt and rail members are in engagement, the joint may be compressed and/or glued or welded to form a permanent connection.

At the other side, to the left in Fig. 2, the first and second cover layers 121, 123 are bent sharply to form a waterproof closure of the skirt member 120, this bend 136 forming the lowermost edge 32 of the skirt member in the mounted state. The edges 1212, 1232 are here bent inwards and upwards so that they are located between the skirt member 120 and the roofing material (not shown) in the mounted state. This means that the joint is protected from the weather and that the exterior surface of the skirt member is smooth and uninterrupted hence providing optimal water draining properties.

In Fig. 2 the second adhesive layer 124 is only a strip of material having a width of 2-5 cm and the third cover layer only slightly wider. This embodiment is particularly relevant when the third cover layer is intended to be removed and the second adhesive layer intended for adhering to the exterior side of the roofing material (not shown). The second adhesive layer is then only needed on the part of the skirt member 120, which is actually overlapping the roofing material and, as is well-known to the skilled person, this is often only the lowermost part of the skirt member, particularly when using undulated tiles. The uppermost part of the skirt member spans the gap between the window frame and the roofing material, which is typically occupied by insulation material if not left open, and an exposed adhesive material at this part of the skirt member is then not needed.

The third cover layer 125 may be of the same width as the second adhesive layer 124, but when using a relative thick and/or plastic adhesive material, the cover layer is preferably somewhat over-sized to ensure that it keeps covering the adhesive layer even if it deformed by pressure during transport or the like.

It is also possible to provide the second adhesive layer 24,124 as two or more strips of material running substantially in parallel, as dots or in any other appropriate non-continuous pattern, so that the surface area of the second adhesive layer is smaller than the surface area of the first adhesive layer or vice versa. The third cover layer 25, 125 may then be one continuous sheet of material or two or more separate strips or pieces, corresponding to the pattern of the adhesive material.

Likewise, the third cover layer 25, 125 may be provided as two or more pieces or with means for separation into two or more pieces, such as a perforation providing a weakening of the material or a line or pattern indicating where to cut the material. This allows one piece to be removed, while leaving the other(s) on. In this way it is for example possible to use the adhesive properties of the second adhesive layer 24, 124 for attachment to the roofing material at the lowermost part of the skirt member near its second edge 132, 136, while keeping the uppermost part protected so that it may serve insulating and/or sound-dampening purposes.

These considerations with regards to the provision of adhesive and cover layers as one or more separate parts apply to both of the embodiments shown.

Though not visible in the drawing it is to be understood that all layers of the skirt member 20, 120 have substantially the same length when seen in parallel to the first and second edges 31, 32 or bent edges 135, 136. However, the end edges 33, 34 may be bent in the same way as shown on the lowermost edge in Fig. 2 to provide a water-proof and durable closure of the ends of the skirt member. To facilitate this, the adhesive layers 22, 24, 122, 124 may be slightly shorter than the first and second cover layers.

In Fig. 2 the skirt member 120 is shown with a second adhesive layer and a third cover layer, which are considerably narrower than the first and second cover layers and the third cover layer is intended for being removed. The bending of the edges described with reference to this embodiment may, however, also be employed in other embodiment, where the layers are of more equal size and/or where the third cover layer is not intended to be removed. In the latter case, the third cover may be included in one or more of the bends to fixate it in relation to the other layers. Likewise it is to be understood that bent edges may be found even on skirt members, where all layers are of the same width and/or length and that the adhesive material will then be clamped between the cover layers in the bend. Which is the more expedient embodiment depends on factors such as the thickness and chemical and physical properties of the adhesive materials and frictional properties of the cover layers. It is also possible to include one adhesive layer in the bends and to leave the other out.

In Fig. 2 the skirt member is shown with a depression 137 in the first and second cover layers 121, 123 close to the first bend edges 1211, 1231 forming the first edge 131 of the skirt member 120. Such a depression is also found on prior art skirt members and is intended to guide the bend of the skirt member, when it is being bend back as part of the process for mounting a roof window. To serve its purpose, this bend should preferably be relatively sharp, and it therefore preferred that the first adhesive layer 122 is not present between the first and second cover layers at this point.

In this the invention has been described with reference to a flashing element intended for use at the bottom of a roof window, but it is to be understood that the skirt as defined in the claims may be used at different positions in relation to the window or with other types of roof penetrating structures. Likewise it is to be understood that the skirt member does not have to be connected to a rail member, but that it may be used on its own, possibly being connected directly to a roof penetrating structure.

## Claims

1. A skirt member (20, 120) for use in a flashing for a roof penetrating structure, comprising a first edge (31, 131) intended to be arranged at the roof penetrating structure, a second edge (32, 132) opposite the first edge (31, 131) and intended to rest on a roof surface and two end edges extending between the first and second edges, and comprising a first cover layer (21, 121) and a second cover layer (23, 123), said first and second cover layers being interconnected by a first adhesive layer (22, 122), said first cover layer (21, 121) being intended to face the exterior of a building in the mounted state of the flashing, and wherein it further comprises a second adhesive layer (24, 124) interconnecting a third cover layer (25, 125) to the second cover layer (23, 123), wherein the second cover layer (23, 123) being made of a sheet material or nonwoven made of a polymer, **characterized in that**
said first adhesive layer (22,122) having a density of at least 2.5 g/ml,
and that said first adhesive layer (22, 122) comprises a non-structural constituent in the form of a metal compound and said second adhesive layer (24, 124) is made from material without metal particles.

2. A skirt member (20, 120) according to claim 1, where the metal compound of the first adhesive layer (22, 122) is having a density higher than 3.5 g/ml, preferably higher than 4.5g/ml.

3. A skirt member (20, 120) according to claim 1 or 2, where the second adhesive layer (24, 124) comprises a non-structural constituent in the form of carbon black and particulate barium sulphate.

4. A skirt member (20,120) according to any one of the preceding claims, where the adhesive force of the second adhesive layer (24, 124) to the second cover (23, 123) layer is stronger than to the third cover layer (25, 125).

5. A skirt member (20,120) according to any one of the preceding claims, where the first cover layer (21, 121) is made of a sheet material, preferably having a thickness of 0.1 to 0.5 mm and/or preferably being made of aluminium.

6. A skirt member (20,120) according to any of the preceding claims, where the second adhesive layer (24, 124) is made of butyl rubber.

7. A skirt member (20,120) according to any of the preceding claims, where the surface area of the second adhesive layer (24, 124) is smaller than the surface area of the first adhesive layer (122, 122) and/or is provided in a non-continuous pattern, preferably dots or stripes extending in parallel with the second edge (32, 132).

8. A skirt member (20,120) according to any of the preceding claims, where the third cover layer (25, 125) comprises two or more separate sheet members, a weakening zone allowing separation, and/or a pattern indicating where to separate.

9. A skirt member (20,120) according to any of the preceding claims, which is corrugated or comprises a pleating.

10. A flashing element for use in a flashing for a roof penetrating structure comprising a skirt member (20,120) according to any of claims 1-9 and a rail member made from a sheet material and adapted for being attached to the roof penetrating structure, where the first edge (31, 131) of the skirt member is connected to the rail member.

11. Use of a skirt member (20,120) according to any of claims 1-9 or a flashing element according to claim 10 in flashing a roof window mounted in an inclined roof.

## Patentansprüche

1. Abschlussblech (20, 120) zur Verwendung mit einem Abdeckblech für eine dachdurchdringende Konstruktion, umfassend eine erste Kante (31, 131), die dazu vorgesehen ist, an der dachdurchdringenden Konstruktion angeordnet zu werden, eine zweite der ersten Kante (31, 131) gegenüberliegende Kante (32, 132), dazu vorgesehen, auf einer Dachoberfläche zu liegen, und zwei Endkanten, die sich zwischen der ersten und zweiten Kante erstrecken, und eine erste Schutzschicht (21, 121) und eine zweite Schutzschicht (23, 123) umfassend, wobei die erste und zweite Schutzschicht durch eine erste Haftschicht (22, 122) miteinander verbunden sind, wobei die erste Schutzschicht (21, 121) dazu vorgesehen ist, im montierten Zustand des Abdeckblechs dem Äußeren eines Gebäudes zugekehrt zu sein, und wobei es ferner eine zweite Haftschicht (24, 124) umfasst, mit der eine dritte Schutzschicht (25, 125) und die zweite Schutzschicht (23, 123) verbunden sind, wobei die zweite Schutzschicht (23, 123) aus einem Bahnmaterial oder Vlies hergestellt ist, das aus einem Polymer hergestellt ist, **dadurch gekennzeichnet, dass**
die erste Haftschicht (22, 122) eine Dichte von mindestens 2,5 g/ml aufweist,
und dass die erste Haftschicht (22, 122) einen nicht strukturellen Bestandteil in der Form einer Metallverbindung umfasst und die zweite Haftschicht (24, 124) aus Material ohne Metallpartikel hergestellt ist.

2. Abschlussblech (20, 120) nach Anspruch 1, wobei die Metallverbindung der ersten Haftschicht (22, 122) eine Dichte hat, die höher als 3,5 g/ml, vorzugsweise höher als 4,5 g/ml ist.

3. Abschlussblech (20, 120) nach Anspruch 1 oder 2, wobei die zweite Haftschicht (24, 124) einen nicht strukturellen Bestandteil in der Form von Ruß und Bariumsulfatpartikeln umfasst.

4. Abschlussblech (20, 120) nach einem der vorstehenden Ansprüche, wobei die Haftfestigkeit der zweiten Haftschicht (24, 124) an der zweiten Schutzschicht (23, 123) stärker als an der dritten Schutzschicht (25, 125) ist.

5. Abschlussblech (20, 120) nach einem der vorstehenden Ansprüche, wobei die erste Schutzschicht (21, 121) aus einem Bahnmaterial hergestellt ist, vorzugsweise mit einer Dicke von 0,1 bis 0,5 mm und/oder vorzugsweise aus Aluminium hergestellt.

6. Abschlussblech (20, 120) nach einem der vorstehenden Ansprüche, wobei die zweite Haftschicht (24, 124) aus Butylgummi hergestellt ist.

7. Abschlussblech (20, 120) nach einem der vorstehenden Ansprüche, wobei die Oberflächengröße der zweiten Haftschicht (24, 124) kleiner als die Oberflächengröße der ersten Haftschicht (122, 122) ist und/oder als ein nicht kontinuierliches Muster, vorzugsweise als Punkte oder Streifen, bereitgestellt wird, die sich parallel zur zweiten Kante (32, 132) erstrecken.

8. Abschlussblech (20, 120) nach einem der vorstehenden Ansprüche, wobei die dritte Schutzschicht (25, 125) zwei oder mehr getrennte Bahnelemente, eine Schwächungszone, welche die Trennung ermöglicht, und/oder ein Muster umfasst, das anzeigt, wo getrennt werden soll.

9. Abschlussblech (20, 120) nach einem der vorstehenden Ansprüche, das gewellt ist oder eine Plissierung umfasst.

10. Abdeckblechelement zur Verwendung mit einem Abdeckblech für eine dachdurchdringende Konstruktion, umfassend ein Abschlussblech (20, 120) nach einem der Ansprüche 1 bis 9 und ein Randblech, das aus Bahnmaterial hergestellt ist und dazu eingerichtet ist, an der dachdurchdringenden Konstruktion befestigt zu werden, wobei die erste Kante (31, 131) des Abschlussblechs (20, 120) mit dem Randblech verbunden wird.

11. Verwendung eines Abschlussblechs (20, 120) nach einem der Ansprüche 1 bis 9 oder eines Abdeckblechelements gemäß Anspruch 10 beim Versehen eines Dachfensters, das in einem geneigten Dach montiert ist, mit einem Abdeckblech.

## Revendications

1. Organe de jupe (20, 120) pour l'utilisation dans un solin pour une structure pénétrant dans le toit, comprenant un premier bord (31, 131) prévu pour être disposé au niveau de la structure pénétrant dans le toit, un deuxième bord (32, 132) opposé au premier bord (31, 131) et prévu pour reposer sur une surface de toit et deux bords d'extrémité s'étendant entre le premier et le deuxième bord, et comprenant une première couche de recouvrement (21, 121) et une deuxième couche de recouvrement (23, 123), lesdites première et deuxième couches de recouvrement étant interconnectées par une première couche adhésive (22, 122), ladite première couche de recouvrement (21, 121) étant prévue pour faire face à l'extérieur d'un bâtiment dans l'état monté du solin, et comprenant en outre une deuxième couche adhésive (24, 124) reliant une troisième couche de recouvrement (25, 125) à la deuxième couche de recouvrement (23, 123), la deuxième couche de recouvrement (23, 123) étant fabriquée en un matériau en feuille ou en un non-tissé fabriqués à partir d'un polymère, **caractérisé en ce que**
ladite première couche adhésive (22, 122) présente une densité d'au moins 2,5 g/ml,
et **en ce que** ladite première couche adhésive (22, 122) comprend un constituant non structurel sous forme de composé métallique et ladite deuxième couche adhésive (24, 124) est fabriquée à partir d'un matériau sans particules métalliques.

2. Organe de jupe (20, 120) selon la revendication 1, dans lequel le composé métallique de la première couche adhésive (22, 122) présente une densité supérieure à 3,5 g/ml, de préférence supérieure à 4,5 g/ml.

3. Organe de jupe (20, 120) selon la revendication 1 ou 2, dans lequel la deuxième couche adhésive (24, 124) comprend un constituant non structurel sous forme de noir de carbone et de sulfate de baryum particulaire.

4. Organe de jupe (20, 120) selon l'une quelconque des revendications précédentes, dans lequel la force adhésive de la deuxième couche adhésive (24, 124) sur la deuxième couche de recouvrement (23, 123) est plus forte que sur la troisième couche de recouvrement (25, 125).

5. Organe de jupe (20, 120) selon l'une quelconque des revendications précédentes, dans lequel la première couche de recouvrement (21, 121) est fabriquée en un matériau en feuille, de préférence ayant une épaisseur de 0,1 à 0,5 mm et/ou de préférence fabriqué en aluminium.

6. Organe de jupe (20, 120) selon l'une quelconque des revendications précédentes, dans lequel la deuxième couche adhésive (24, 124) est fabriquée en caoutchouc butyle.

7. Organe de jupe (20, 120) selon l'une quelconque des revendications précédentes, dans lequel la superficie de la deuxième couche adhésive (24, 124) est plus petite que la superficie de la première couche adhésive (122, 122) et/ou se présente sous forme de motif non continu, constitué de préférence de points ou de bandes s'étendant parallèlement au deuxième bord (32, 132) .

8. Organe de jupe (20, 120) selon l'une quelconque des revendications précédentes, dans lequel la troisième couche de recouvrement (25, 125) comprend deux ou plus de deux organes en feuille séparés, une zone d'affaiblissement permettant la séparation, et/ou un motif indiquant où effectuer la séparation.

9. Organe de jupe (20, 120) selon l'une quelconque des revendications précédentes, celui-ci étant ondulé ou comprenant des plis.

10. Elément de solin pour l'utilisation dans un solin pour une structure pénétrant dans le toit, comprenant un organe de jupe (20, 120) selon l'une quelconque des revendications 1 à 9, et un organe de rail fabriqué à partir de matériau en feuille et prévu pour être attaché à la structure pénétrant dans le toit, le premier bord (31, 131) de l'organe de jupe étant connecté à l'organe de rail.

11. Utilisation d'un organe de jupe (20, 120) selon l'une quelconque des revendications 1 à 9, ou d'un élément de solin selon la revendication 10, pour installer un solin sur une fenêtre de toit montée dans un toit en pente.
